# EUROPÄISCHE PATENTANMELDUNG

(11) **EP 0 984 269 A1**
(43) Veröffentlichungstag der Anmeldung: **08.03.2000**
(21) Anmeldenummer: 98810748.8
(22) Anmeldetag: 04.08.1998
(51) Int. Cl.: G01N 21/65, G01J 3/44

(54) **Trägersubstrat für Raman-spektrometrische Analysen**

(71) Anmelder: Alusuisse Technology & Management AG (Alusuisse Technology & Management SA) (Alusuisse Technology & Management Ltd.), 8212 Neuhausen am Rheinfall (CH)
(72) Erfinder: Schlottig, Falko, 8052 Zürich (CH); Meyer, Norbert, 09126 Chemnitz (DE); Textor, Marcus, 8200 Schaffhausen (CH); Schnaut, Ulrich, 78239 Rielasingen (DE); Paulet, Jean-François, 8225 Siblingen (CH); Sekinger, Kurt, 8604 Volketswil (CH)

(57) **Zusammenfassung**

Trägersubstrat für die Oberflächen-verstärkte, Raman-spektrometrische Analyse von Substanzen. Das Trägersubstrat enthält eine Trägerschicht (12) und eine Vielzahl von Nanokörpern (14), welche wenigstens an eine Seite der Trägerschicht angeformt sind. Jeder Nanokörper (14) weist einen an die Trägerschicht (12) anliegenden, stabförmigen Stammbereich (16) und wenigstens zwei, vorzugsweise 2 bis 4, an den Stammbereich (16) angeformte Verzweigungselemente (20) auf. Die Dichte der Verzweigungselemente (20) beträgt mindestens 10⁸/cm².

Weiter wird ein Verfahren zur Herstellung von Trägersubstraten für die Oberflächenverstärkte, Raman-spektrometrische Analyse von Substanzen beschrieben. Das Vefahren betrifft die Herstellung eines porösen Formkörpers (22) durch anodische Oxidation eines Metallsubstrates (24). Nach Beschichtung des Formkörpers (22) mit dem gewünschten Trägersubstratmaterial und dem nachfolgenden Wegätzen des Formkörpers (22) resultiert ein Trägersubstrat, welches eine Vielzahl von an eine Trägerschicht (12) angeformte Nanokörper (14) enthält. Jeder Nanokörper (14) weist einen maximalen Querschnittsdurchmesser (d) zwischen 10 und 250 nm und eine Höhe (h) von 30 nm bis 5 µm auf.

## Beschreibung

Vorliegende Erfindung betrifft ein Trägersubstrat für die Oberflächen-verstärkte, Raman-spektrometrische Analyse von Substanzen, enthaltend eine Trägerschicht und eine Vielzahl von Nanokörpern, welche wenigstens an eine Seite der Trägerschicht angeformt sind. Die Erfindung betrifft weiter ein Verfahren zur Herstellung eines Trägersubstrates für die Oberflächen-verstärkte, Raman-spektrometrische Analyse von Substanzen, enthaltend eine Trägerschicht und eine Vielzahl von an die Trägerschicht angeformten Nanokörpern mit jeweils wenigstens einer endständigen Spitze, wobei jeder Nanokörper einen maximalen Querschnittsdurchmesser zwischen 10 und 250 nm und eine Höhe von 30 nm bis 5 µm aufweist und die Dichte der endständigen Spitzen mindestens 10⁸/cm² beträgt.

Die Raman-Spektrometrie dient der qualitativen und quantitativen chemischen Analyse von Substanzen. Dabei wird eine Substanz mit einer intensiven, monochromatischen elektromagnetischen Strahlung, beispielsweise mit Laserlicht, bestrahlt. Dazu wird üblicherweise elektromagnetische Strahlung aus dem sichtbaren oder ultravioletten Spektralbereich verwendet. Die zu untersuchende Substanz kann in Form eines Gases, einer Flüssigkeit oder eines Festkörpers vorliegen. Bei der Messung des gestreuten Lichtes mit einem Spektrographen, d.h. bei der Bestimmung der Strahlungsintensität des gestreuten Lichtes in Funktion der Wellenlänge, erhält man ein Spektrum, welches aus einer starken Linie, der sogenannten Erregerlinie, und sehr viel schwächeren Linien, den sogenannten Raman-Linien, zu beiden Seiten der starken Linie besteht. Die Erregerlinie weist diesselbe Wellenzahl auf wie die einfallende Strahlung. Die Raman-Linien entsprechen jeweils spezifischen Rotations- oder Schwingungszuständen der zu untersuchenden Substanz. Die Raman-Linien sind auf einer Wellenzahlskala gegenüber der Erregerlinie symmetrisch angeordnet. Zudem weisen die Raman-Linien gegenüber der Erregerlinie eine typischerweise 10⁻³ bis 10⁻⁴ fach kleinere Intensität auf, wobei die Intensitäten der Raman-Linien auf der niederfrequenten Seite gegenüber denen auf der höherfrequenten Seite üblicherweise wesentlich grösser sind.

Die Unterschiede der Frequenzen zwischen Raman-Linien und Erregerlinie sind von der Frequenz der Erregerlinie unabhängig. Dagegen hängt die Intensität der Streustrahlung stark von der Frequenz der Erregerstrahlung ab.

Das Raman-Spektrum, d.h. die Sequenzen der Raman-Linien, sind für jede Substanz charakteristisch. Eine Verbindung kann durch Vergleich seines Raman-Spektrums mit den Spektren geeigneter, bekannter Verbindungen identifiziert werden. Dafür stehen umfangreiche systematisch geordnete Spektrensammlungen zur Verfügung. Die quantitative Analyse beruht auf der Messung der Intensitäten von Raman-Linien der zu bestimmenden Substanz, wobei die Intensität proportional zur Konzentration der Substanz ist. Weiter lassen sich mit der Raman-Spektrometrie auch Strukturanalysen durchführen, da Strukturbausteine von Molekülen, wie beispielsweise Carbonyl-, Hydroxyl- oder Methylgruppen, jeweils charakteristische Gruppenfrequenzen aufweisen.

Die Raman-Spektren erfassen die Rotations- und Schwingungsfrequenzen der Substanzbausteine, so dass sich dadurch u.a. Aussagen über Polarisierbarkeiten, chemische Bindungskräfte und Atomabstände in Molekülen gewinnen lassen. Die Raman-Linien entstehen durch die inelastische Streuung von Lichtquanten an den Molekülen, wobei die Moleküle angeregt werden bzw. angeregte Moleküle in einen Zustand geringerer Energie übergehen. Die Raman-Linien treten auf, wenn sich die Polarisierbarkeiten bei den Schwingungen und Rotationen ändern.

Eine Hauptschwierigkeit bei der Raman-Spektrometrie liegt in der geringen Intensität der Raman-Linien. Diese Schwierigkeit kann beispielsweise durch die Verwendung hochenergetischer Laser oder durch Verwendung grosser Mengen der zu untersuchenden Substanz verringert werden. Der Einsatz eines hochenergetischen Lasers weist neben den hierzu notwendigen, hohen Investitionskosten auch den Nachteil auf, dass empfindliche Substanzen beschädigt werden können, oder die zu untersuchende Substanz kann sich durch die hohe Energiezufuhr eines Hochleistungslasers in ihrer Struktur, beispielsweise durch chemische Reaktionen wie Verbrennung, verändern.

In einer speziellen Ausführungsform der Raman-Spektrometrie, der sogenannten Oberflächen-verstärkten Raman-Spektrometrie oder im Englischen Sprachgebrauch als 'Surface Enhanced Raman Spectroscopy' (SERS) oder als 'Surface Enhanced Resonance Raman Spectroscopy' (SERRS) bezeichnet, wird bei bestimmter Ausgestaltung von Trägersubstratoberflächen eine markante Intensitätserhöhung der Raman-Linien von an der Trägersubstratoberfläche adsorbierten Substanzen, beispielsweise Molekülen, beobachtet. Die Erhöhung der Intensität der Ramanstreuung bei der Oberflächen-verstärkten Raman-Spektrometrie gegenüber der Raman-Spektrometrie ohne Oberflächen-Verstärkung liegt in der Grössenordnung von 10⁶. Der Effekt der Erhöhung der Streuintensität hängt dabei stark von der Rauhigkeit und der räumlichen Ausbildung der Rauhigkeitsstruktur auf der Trägersubstratoberfläche ab.

Die Oberflächen-verstärkte Raman-Streuung basiert wesentlich auf einer Nanokörper aufweisenden Rauhigkeitsstruktur, d.h. einer Trägersubstratoberfläche mit submikronen Struktur-Elementen. Dabei weisen die submikronen Strukturelemente Abmessungen im Submikrometerbereich auf. Die submikronen Strukturelemente können bei Bestrahlung der darauf adsorbierten Substanz mit einer elektromagnetischen Erregerstrahlung infolge elektronischer und/oder chermischer Wechselwirkungen zwischen Adsorbat, d.h. der zu untersuchenden Substanz, und der die Nanokörper aufweisenden Trägersubstratoberfläche zu einer Überhöhung der lokalen Feldstärke führen. Demzufolge hängt die Wechselwirkung, welche zur Oberflächen-verstärkten Raman-Streuung führt, einerseits von der strukturellen und materiel-len Ausbildung der Trägersuhstratoberfläche und andererseits auch von der elektronischen Struktur der darauf adsorbierten Substanz ab. Die zur Oberflächen-verstärkten Raman-Streuung führende Wechselwirkung kann einerseits durch eine klassische, elektromagnetische Verstärkung beschrieben werden, welche über die Zunahme der Amplitude des lokalen elektromagnetischen Feldes beschrieben wird und üblicherweise den grössten Teil der Verstärkung bewirkt, und andererseits durch eine chemische Verstärkung, die zu einer Verstärkung der Wechselwirkung in einer ersten Monolage der adsorbierten Substanz führt, wobei in dieser ersten Monolage auch Ladungs-Transfer-Übergänge zwischen der Substanz und dem Trägersubstrat stattfinden können.

Die Oberflächen-verstärkte Raman-Streuung ist weiter abhängig von der verwendeten Erregerstrahlung, sowie vom Verhältnis der Nanokörperabmessungen zur Wellenlänge der Erregerstrahlung. Zur Erreichung einer maximalen Intensität der Raman-Linien muss weiter die Dichte der auf dem Trägersubstrat befindlichen Nanokörper möglichst hoch sein. Zudem muss die Gesamtheit der Nanokörper eine optimale Grössenverteilung aufweisen. Bei optimaler Wahl der genannten Parameter wird die Wechselwirkung zwischen der auf der Trägersubstratoberfläche adsorbierten Substanz und der elektromagnetischen Erregerstrahlung maximal.

In der EP 0 484 425 B1 wird ein Trägersubstrat für die Oberflächen-verstärkte Raman-Spektrometrie beschrieben, welches eine auf ein Substrat deponierte, zusammenhängende, dielektrische Rauhigkeitsschicht mit einer Dicke von mindestens 170 nm und eine durchgehend auf dieser ersten Schicht abgelagerten zweiten Schicht enthält, und die zweite Schicht eine Vielzahl von Metall nadeln aufweist, wobei die Metallnadeln eine Länge von mindestens 350 nm und einer Breite von mindestens 50 nm aufweisen, und die Dichte der Metallnadeln mindestens 70 · 10⁸/cm² beträgt. Im weiteren beschreibt die EP 0 484 425 B1 ein Verfahren zur Herstellung derartiger Trägersubstrate, wobei die dielektrische Schicht, sowie die zweite Schicht mit den Metallnadeln durch Vakuumdeposition auf die Substratoberfläche abgeschieden werden. Die Bildung der Metallnadeln wird dadurch erreicht, dass das Mctall in einem bestimmten Winkel und mit einer vorgegebenen Aufdampfratc auf die dielektrische Schicht aufgedampft wird.

Aufgabe vorliegender Erfindung ist die Bereitstellung von gegenüber dem Stand der Technik einfacher herzustellenden Trägersubstraten für die Oberflächen-verstärkte Raman-Spektrometrie, welche zudem einen weiter erhöhten Anteil der Oberflächen-verstärkten Raman-Streuung bewirken.

Erfindungsgemäss wird diese Aufgaben dadurch gelöst, dass jeder Nanokörper einen an die Trägerschicht anliegenden, stabförmigen Stammbereich und wenigstens zwei, vorzugsweise 2 bis 4, an den Stammbereich angeformte Verzweigungselemente aufweist, und die Dichte der Verzweigungselemente mindestens 10⁸/cm² beträgt.

Die Nanokörper befinden sich an wenigstens einer Seite der Trägerschicht. Bevorzugt liegen alle Nanokörper jedoch an ein und derselben Seite der Trägerschicht. Die Nanokörper weisen weiter bevorzugt wenigstens in einem von der Trägerschicht abragenden Teil einen orthogonal zur Trägerschicht liegenden Stammbereich auf. Besonders bevorzugt werden Nanokörper, deren ganzer stabförmiger Stammbereich orthogonal zur Trägerschicht-Oberfläche liegt.

Die Nanokörper weisen bevorzugt einen maximalen Querschnittsdurchmesser zwischen 10 und 250 nm, insbesondere zwischen 10 und 150 nm, und eine Höhe von 30 nm bis 5 µm, insbesondere von 30 nm bis 2 µm, auf. Dabei variiert die Höhe der einzelnen Nanokörper bevorzugt um nicht mehr als ± 5 %, insbesondere um nicht mehr als ± 3 %, von der über alle Nanokörper gemittelten Höhe, wobei unter der Höhe eines Nanokörpers die maximale, orthogonal zur Oberfläche der Trägerschicht gemessene Abmessung des Nanokörpers, d.h. des Stammbereiches zusammen mit den angeformten Verzweigungselementen, verstanden wird.

Bevorzugt sind die Nanokörper im wesentlichen vollflächig über die eine Seite der Trägerschicht verteilt. Dabei ist die Verteilung der Nanokörper ganz bevorzugt homogen. Die Dichte der von den Stammbereichen der Nanokörper abragenden Verzweigungselemente beträgt zweckmässigerweise mindestens 10⁸/cm². Weiter bevorzugt weisen die erfindungsgemässen Trägersubstrate eine Dichte der Verzweigungselemente von 10⁸ bis 10¹²/cm² auf.

In einer weiteren bevorzugten Ausführungsform weisen 95 % aller Verzweigungselemente eine gleichmässige Höhe auf, wobei gleichmässige Höhe bedeuted, dass diese um nicht mehr als ± 5 % der über das gesamte Substrat gemittelten Höhe der Verzweigungselemente variiert. Als Höhe eines Verzweigungselementes wird die maximale, orthogonal zur Oberfläche der Trägerschicht gemessene Abmessung des Verzweigungselementes verstanden.

Die Nanokörper und/oder die Trägerschicht bestehen beispielsweise aus Ni, Al, Pd, Pt, W, Fe, Ta, Rh, Cd, Cu, Au, Ag, In, Co, Sn, Si, Ge, Te, Se, oder einer chemischen Verbindung enthaltend wenigstens einen dieser Stoffe, wie beispielsweise Sn- oder InSn-Oxid, oder einer Legierung der vorgenannten Metalle. Weiter können die Trägerschicht und/oder die Nanokörper aus einem der vorstehend genannten Materialien bestehen, wobei zusätzlich eine Metallschicht, insbesondere aus Au oder Ag, deponiert werden kann. Bevorzugt bestehen die Nanokörper und die Trägerschicht aus demselben Material. Dabei bestehen die Trägerschicht und die Nanokörper besonders bevorzugt aus Au oder Ag.

In einer weiteren bevorzugten Ausführungsform weist die Trägerschicht zwischen den Nanokörpern eine mechanische Stützschicht auf, welche aus einem Material, bevorzugt aus einem Oxid und insbesondere aus Aluminiumoxid besteht. Zweckmässigerweise misst die Schichtdicke der mechanischen Stützschicht weniger als die über die ganze Trägerschicht gemittelten Höhe der Stammbereiche aller Nanokörper und insbesondere weniger als die Hälfte dieser gemittelten Höhe der Stamm bereiche.

Die erfindungsgemässen Trägersubstrate eignen sich hervorragend für die Oberflächen-verstärkte Raman-Spektrometrie, da die einzelnen Verzweigungselemente, wie auch der Stammbereich der Nanokörper als die Raman-Streuung verstärkende submikrone Strukturelemente dienen können und durch die dadurch realisierte, sehr hohe Zähl von submikronen Strukturelementen die Intensität der Raman-Linien stark, d.h. gegenüber der Raman-Spektrometrie ohne Oberflächen-Verstärkung um mehr als den Faktor 10⁶, erhöht wird.

Eine weitere Aufgabe vorliegender Erfindung besteht in der Angabe eines gegenüber dem Stand der Technik einfacheren und kostengünstigeren Verfahrens zur Herstellung bekannter Trägersubstrate für die Oberflächen-verstärkte, Raman-spektrometrische Analyse von Substanzen, sowie in der Angabe eines Verfahrens zur Herstellung der erfindungsgemässen Trägersubstrate.

Die auf das Verfahren gerichtete Aufgabe wird erfindungsgemäss dadurch gelöst, dass
a) in einem ersten Schritt ein Formkörper mit einer zur gewünschten Trägersubstratoberfläche spiegelbildlichen Formkörperoberfläche dadurch geschaffen wird, dass ein Substratkörper aus einem anodisierbaren Metall anodisch in einem das betreffende Metalloxid rücklösenden Elektrolyten oxidiert wird, wodurch wenigstens auf einer Substratkörperoberfläche eine Formschicht aus Metalloxid, enthaltend eine an die Substratkörperoberfläche anliegende Sperrschicht und eine dieser anliegenden, porösen Schicht, gebildet wird, und die poröse Schicht die zu den gewünschen Nanokörpern spiegelbildlich ausgebildeten Poren-Kavitäten enthält;
b) in einem zweiten Schritt die Formkörperoberfläche durch chemische und/oder elektrolytische Methoden ganzflächig derart beschichtet wird, dass die Poren-Kavitäten vollständig mit einem Beschichtungsmaterial ausgefüllt werden und zudem eine die Poren-Kavitäten verbindende Trägerschicht aus einem Beschichtungsmaterial gebildet wird, und die Trägerschicht eine zusammenhängende, mechanisch tragende Schicht darstellt;
c) und in einem dritten Schritt der Formkörper derart entfernt wird, dass zumindest die endständigen Spitzen frei liegen.

Der für die erfindungsgemässe Herstellung von Trägersubstraten für die Oberflächen-verstärkte, Raman-spektrometrische Analyse von Substanzen notwendige Formkörper mit einer zur gewünschten Trägersubstratoberfläche im wesentlichen spiegelbildlichen Formkörperoberfläche besteht zweckmässigerweise aus einem Substratkörper und einer Formschicht, wobei letztere die zur gewünschten Trägersubstraloberfläche im wesentlichen spiegelbildliche Oberflächenstruktur enthält.

Der Substratkörper besteht bevorzugt aus Aluminium oder einer Aluminiumlegierung und stellt bevorzugt einen Teil eines Stückgutes, beispielsweise eines Profiles, Balkens oder eine andere Form von Stücken, einer Platte, eines Bandes, Bleches oder einer Folie aus Aluminium dar, oder eine Aluminium-Deckschicht eines Verbundwerkstoffes, insbesondere als Aluminiumdeckschicht einer Verbundplatte, oder betrifft eine auf einen beliebigen Werkstoff -- beispielsweise elektrolytisch -- aufgebrachte Aluminiumschicht, wie beispielsweise eine plattierte Aluminiumschicht. Weiter bevorzugt betrifft der Substratkörper ein Werkstück aus Aluminium, welches z.B. durch ein Walz-, Extrusions-, Schmiede- oder Fliesspressverfahren hergestellt wird. Der Substratkörper kann auch durch Biegen, Tiefziehen, Kaltfliesspressen oder dergleichen umgeformt sein.

Mit dem Werkstoff Aluminium sind in vorliegendem Text Aluminium aller Reinheitsgrade, sowie alle handelsüblichen Aluminiumlegierungen umfasst. Beispielsweise umfasst der Begriff Aluminium alle Walz-, Knet-, Guss-, Schmiede- und Presslegierungen aus Aluminium. Zweckmässigerweise besteht der Substratkörper aus Reinaluminium mit einem Reinheitsgrad von gleich oder grösser 98.3 Gew.-% oder Aluminiumlegierungen mit wenigstens einem der Elemente aus der Reihe von Si, Mg, Mn, Cu, Zn oder Fe. Der Substratkörper aus Reinaluminium kann beispielsweise aus Aluminium einer Reinheit von 98.3 Gew.-% und höher, zweckmässig 99.0 Gew.-% und höher, bevorzugt 99.9 Gew.-% und höher und insbesondere 99.95 Gew.-% und höher, und dem Rest handelsübliche Verunreinigungen bestehen.

Neben Aluminium genannter Reinheiten kann der Substratkörper auch aus einer Aluminiumlegierung bestehen, enthaltend 0.25 Gew.-% bis 5 Gew.-%, insbesondere 0.5 bis 2 Gew.-%, Magnesium oder enthaltend 0.2 bis 2 Gew.-% Mangan oder enthaltend 0.5 bis 5 Gew.-% Magnesium und 0.2 bis 2 Gew.-% Mangan, insbesondere z.B. 1 Gew.-% Magnesium und 0.5 Gew.-% Mangan oder enthaltend 0.1 bis 12 Gew.-%, vorzugsweise 0.1 bis 5 Gew.-%, Kupfer oder enthaltend 0.5 bis 5 Gew.-% Zink und 0.5 bis 5 Gew.-% Magnesium oder enthaltend 0.5 bis 5 Gew.-% Zink, 0.5 bis 5 Gew.-% Magnesium und 0.5 bis 5 Gew.-% Kupfer oder enthaltend 0.5 bis 5 Gew.-% Eisen und 0.2 bis 2 Gew.-% Mangan, insbesondere z.B. 1.5 Gew.-% Eisen und 0.4 Gew.-% Mangan.

Die Formschicht besteht bevorzugt aus Aluminiumoxid. Die Herstellung einer für das erfindungsgemässe Verfahren erforderlichen Formschicht erfolgt bevorzugt durch anodische Oxidation der Substratkörperubertläche in einem Elektrolyten unter Poren bildenden Bedingungen. Erfindungswesentlich ist dabei, dass die Poren gegen die freie Oberfläche hin offen sind. Vorteilhaft ist die Porenverteilung über die Oberfläche gleichmässig. Die Schichtdicke der Formschicht beträgt zweckmässigerweise 50 nm bis 5 µm und bevorzugt 50 nm bis 2 µm.

Die Herstellung der Formschicht geschieht beispielsweise durch anodische Oxidation der Substratkörperoberfläche in einem das Aluminiumoxid rücklösenden Elektrolyten. Die Elektrolyttemperatur beträgt zweckmässigerweise zwischen - 5 und 85 "C, bevorzugt zwischen 15 und 80 °C und insbesondere zwischen 30 und 70 °C. Zur Durchführung der anodischen Oxidation kann der Substratkörper oder wenigstens dessen Oberflächenschicht oder zumindest der Teil der Substratkörperoberfläche, der mit einer Formschicht versehen werden soll, in einen entsprechenden Elektrolyten gegeben und als positive Elektrode (Anode) geschaltet werden. Als negative Elektrode (Kathode) dient eine weitere in denselben Elektrolyten gegebene Elektrode aus beispielsweise rostfreiem Stahl, Blei, Aluminium oder Graphit.

Üblicherweise wird die Substratkörperoberfläche vor dem erfindungsgemässen Verfahren einer Vorbehandlung unterzogen, wobei beispielsweise die Substratkörperoberfläche zuerst entfettet, dann gespült und schliesslich gebeizt wird. Das Beizen wird beispielsweise mit einer Natriumhydroxidlösung mit einer Konzentration von 50 bis 200 g/l bei 40 bis 60 °C während einer bis zehn Minuten durchgeführt. Anschliessend kann die Oberfläche gespült und mit einer Säure, wie beispielsweise Salpetersäure, insbesondere einer Konzentration von 25 bis 35 Gew.-% bei Raumtemperatur, d.h. typischerweise im Temperaturbereich 20 - 25 °C, während 20 bis 60 s neutralisiert und erneut gespült werden.

Die Eigenschaften einer mittels anodischer Oxidation hergestellten Oxidschicht, wie beispielsweise die Porendichte und der Porendurchmesser, hängen weitgehend von den Anodisierbedingungen wie beispielsweise Elektrolytzusammensetzung, Elektrolyttemperatur, Stromdichte, Anodisierspannung und Anodisierdauer, sowie vom anodisierten Grundwerkstoff ab. Während der anodischen Oxidation in sauren Elektrolyten bildet sich an der Substratkörperoberfläche eine im wesentlichen porenfreie Grund- oder Sperrschicht und eine poröse Aussenschicht, die während der anodischen Oxidation an ihrer freien Oberfläche durch Rücklösung zum Teil chemisch wieder aufgelöst wird. Dadurch entstehen in der Aussenschicht Poren, die im wesentlichen vertikal zur Substratkörperoberfläche liegen und gegen die freie Oberfläche der Oxidschicht hin offen sind. Die Dicke der Oxidschicht erreicht ihren Maximalwert, wenn sich Wachstum und Rücklösung die Waage halten, was beispielsweise von der angelegten Anodisierspannung, der Elektrolytzusammensetzung, der Stromdichte, der Elektrolyttemperatur, Anodisierdauer, sowie vom anodisierten Grundwerkstoff abhängt.

Für die Durchführung des erfindungsgemässen Verfahrens werden bevorzugt Elektrolyte verwendet, welche eine oder mehrere anorganische und/oder organische Säuren enthalten. Weiter bevorzugt werden Anodisierspannungen von 10 bis 100 V und Stromdichten von 50 bis 3000 A/m². Die Anodisierdauer beträgt typischerweise 1 bis 1000 s, zweckmässigerweise 1 bis 240 s, insbesondere 1 bis 20 s.

Das Anlegen der Anodisierspannung geschieht beispielsweise durch kontinuierliche Erhöhung der angelegten Spannung bis zum jeweiligen vorbestimmten, zeitlich konstanten Wert. Die Stromdichte erhöht sich dabei ebenfalls in Funktion der angelegten Anodisierspannung, erreicht zeitlich nach dem Erreichen der jeweils vorbestimmten, konstanten Spannung einen Maximalwert und fällt dann langsam ab.

Die Schichtdicke der Sperrschicht ist spannungsabhängig und liegt beispielsweise im Bereich 8 bis 16 Angström/V und insbesondere zwischen 10 und 14 Angström/V. Der Porendurchmesser der porösen Aussenschicht ist ebenfalls spannungsabhängig und beträgt beispielsweise zwischen 8 und 13 Angström/V und insbesondere 10 bis 12 Angström/V.

Der Elektrolyt kann beispielsweise eine starke organische oder anorganische Säure oder ein Gemisch starker organischer und/oder anorganischer Säuren enthalten. Typische Beispiele solcher Säuren sind Schwefelsäure (H₂SO₄), oder Phosphorsäure (H₃PO₄). Weitere Säuren, die angewendet werden können, sind beispielsweise Chromsäure, Oxalsäure, Sulfaminsäure, Malonsäure, Maleinsäure oder Sulfosalycilsäure. Auch Gemische genannter Säuren können verwendet werden. Für das erfindungsgemässe Verfahren werden beispielsweise Schwefelsäure in Mengen von 40 bis 350 g/l und bevorzugt 150 bis 200 g/l eingesetzt (Schwefelsäure bezogen auf 100% Säure). Es kann als Elektrolyt auch Phosphorsäure in einer Menge von 60 bis 300 g/l und insbesondere 80 bis 150 g/l angewendet werden, wobei die Säuremenge auf 100 % reine Säure bezogen ist. Ein anderer bevorzugter Elektrolyt ist Schwefelsäure in Mischung mit Oxalsäure, wobei insbesondere eine Menge von 150 bis 200 g/l Schwefelsäure mit beispielsweise 5 bis 25 g/l Oxalsäure gemischt wird. Weiter bevorzugt werden Elektrolyte enthaltend beispielsweise 250 bis 300 g/l Maleinsäure und beispielsweise 1 bis 10 g/l Schwefelsäure. Ein weiterer Elektrolyt enthält beispielsweise 130 bis 170 g/l Sulfosalycilsäure in Mischung mit 6 bis 10 g/l Schwefelsäure.

Für die Herstellung der erfindungsgemässen Trägersubstrate, welche mehrere Verzweigungselemente enthalten, wird die im ersten Verfahrensschritt durchzuführende Oxidation der Substratkörperoberfläche in mehreren Anodisierschritten durchgeführt, wobei in einem ersten Anodisierschritt die Anodisierspannung kontinuierlich oder schrittweise von 0 auf einen ersten Wert U₁ erhöht wird, und in einem weiteren, beispielsweise zweiten Anodisierschritt die Anodisierspannung kontinuierlich oder schrittweise auf einen zweiten, gegenüber U₁ kleineren Wert U₂ reduziert wird. Bevorzugt wird dabei die Anodisierspannung zur Bildung von zylinder- oder kegelstumpfförmigen, langen Poren-Stammbereichen auf einen ersten Wert U₁ zwischen 12 und 80 V eingestellt und nachfolgend zur Bildung wenigstens zweier Porenverzweigungen pro Poren-Stammbereich am gegen die Substratoberfläche gerichteten Ende jeder Pore auf einen zweiten Wert U₂ zwischen 10 und 20 V reduziert.

Die Poren weisen in ihrer vertikalen Ausdehnung einen gegen die Oberfläche der Formschicht gerichteten Stammbereich und einen gegen den Substratkörper gerichteten Verzweigungsbereich auf, d.h. jede im wesentlichen vertikal zur Oberfläche der Formschicht liegende Pore besteht aus einer länglichen, gegen die freie Oberfläche der Formschicht offenen Pore, die sich im Verzweigungsbereich in wenigstens zwei, vorzugsweise 2 bis 4 Vertiefungen oder Porenverzweigungen aufteilt. Zweckmässigerweise weisen die Poren im Stammbereich einen Durchmesser von 10 bis 250 nm, bevorzugt zwischen 10 und 150 nm und insbesondere zwischen 40 und 130 nm auf. Die Porenzahl, d.h. die Zahl der Poren im Stammbereich, beträgt zweckmässigerweise 10⁸ Poren/cm² und höher, bevorzugt 10⁸ bis 10¹² Poren/cm² und insbesondere 10⁹ bis 10¹¹ Poren/cm². Die mittlere Dichte der Formschicht beträgt bevorzugt 2.1 bis 2.7 g/cm³. Weiter bevorzugt weist die Formschicht eine Dielektrizitätskonstante zwischen 5 und 7.5 auf.

Nach dem Anodisierverfahren kann die Obertläche der Formschicht weiteren Behandlungen, wie z.B. chemisch oder elektrolytisch Ätzen, Plasmaätzen, Spülen oder Imprägnieren, zugeführt werden.

Die fertiggestellte Formschicht wird ganzflächig derart beschichtet, dass die in der porösen Schicht des Formkörpers vorhandenen Poren-Kavitäten vollständig mit dem Beschichtungsmaterial ausgefüllt werden, und eine die Nanokörper verbindende Trägerschicht gebildet wird, und die Trägerschicht eine zusammenhängende, mechanisch tragende Schicht darstellt.

Für die Beschichtung der Formkörperoberfläche können beispielsweise Ni, Al, Pd, Pt, W, Fe, Ta, Rh, Cd, Cu, Au, Ag, In, Co, Sn, Si, Ge, Se, Te, oder eine chemische Verbindung enthaltend wenigstens eines dieser Elemente, oder eine Legierung vorstehend aufgeführter Metalle verwendet werden. Bevorzugt werden metallische Beschichtungsmaterialien und insbesondere Beschichtungen aus Au oder Ag.

Die Beschichtung der Formkörperoberfläche kann beispielsweise durch chemische oder elektrolytische Methoden, oder durch PVD (Physical Vapour Deposition) oder CVD (Chemical Vapour Deposition) geschehen. Bevorzugt wird eine chemische und/oder elektrolytische Abscheidung des Beschichtungsmaterials, wobei zweckmässigerweise die Porenkavitäten zuvor chemisch aktiviert werden.

Bevorzugt erfolgt die im zweiten Verfahrensschritt durchzuführende Beschichtung der Formkörperoberfläche in drei Stufen, wobei in einer ersten Stufe die Formkörperoberfläche und insbesondere die Poren-Kavitäten elektrolytisch mit Beschichtungsmaterial bekeimt werden, in einer zweiten Stufe durch eine stromlose, chemische Abscheidung die Poren-Kavitäten vollständig mit Beschichtungsmaterial gefüllt werden und die chemische Abscheidung von Beschichtungsmaterial solange weitergeführt wird, bis auf der zwischen den Poren-Kavitäten liegenden Formkörperoberfläche eine Schicht von 100 nm bis 2 µm aus Beschichtungsmaterial gebildet ist, und in einer dritten Stufe diese Beschichtung galvanisch solange verstärkt wird, bis eine Beschichtungs-Schichtdicke von 10 bis 20 µm resultiert.

Als weiterer erfindungswesentlicher Verfahrensschritt werden die Nanokörper, insbesondere deren Verzweigungselemente, durch vollständiges oder teilweises Entfernen der Formschicht freigelegt.

Das vollständige Freilegen der Nanokörper, d.h. das Trennen der Trägerschicht mit den angeformten Nanokörpern vom Formkörper, kann beispielsweise durch vollständiges Wegätzen des Formkörpers geschehen. In einer bevorzugten Ausführung wird jedoch nur die Formschicht chemisch weggeätzt, so dass die Trägerschicht mit den angeformten Nanokörpern vom Formkörper vollständig getrennt wird und damit in Form eines erfindungsgemässen Trägersubstrates vorliegt.

In einer weiteren bevorzugten Ausführung wird nur ein Teil der Formschicht weggeätzt, so dass auf der Trägerschicht zwischen den Stammbereichen der Nanokörper die Formschicht stehen bleibt und eine mechanische Stützschicht bildet. Dies geschieht beispielsweise durch chemisches Wegätzen des Substratkörpers, der Sperrschicht und eines Teils der porösen Schicht. Der poröse Teil der Formschicht muss jedoch derart entfernt werden, dass die Verzweigungselemente der Nanokörper vollständig freiliegen.

In einer weiteren bevorzugten Ausführungsform des erfindungsgemässen Verfahrens werden die freigelegten Nanokörper einem Ätzprozess unterworfen, beispielsweise durch Plasmaätzen, oder durch chemisches oder elektrolytisches Ätzen. Damit kann beispielsweise die Gestalt der Verzweigungselemente und/oder der Stammbereiche hinsichtlich der Oberflächen-verstärkten Raman-Spektrometrie optimiert werden.

Weiter kann im Rahmen einer Nachbehandlung der erfindungsgemässen Nanokörper auch eine zusätzliche, dünnen Metallschicht deponiert werden, welche die Gestalt der Nanokörper und der Verzweigungselemente derart verändert, dass deren Eigenschaften für die Oberflächen-verstärkte Raman-Spektrometrie einer bestimmten, zu untersuchenden Substanz optimiert werden. Diese zusätzliche, dünne Metallschicht besteht bevorzugt aus einem Edelmetall, insbesondere aus Au oder Ag. Die Deposition dieser zusätzlichen Metallschicht kann beispielsweise durch chemische oder elektrolytische Methoden, durch PVD (Physical Vapour Deposition), wie beispielsweise Sputtern oder Elektronenstrahlverdampfen, oder durch CVD (Chemical Vapour Deposition) geschehen.

Weitere vorteilhafte Weiterbildungen der Erfindung finden sich in den Unteransprüchen.

Das erfindungsgemässe Verfahren erlaubt die kostengünstige Herstellung von Trägersubstraten für die Oberflächen-verstärkte, Raman-spektrometrische Analyse von Substanzen. Das Verfahren erlaubt insbesondere die reproduzierbare Herstellung solcher Trägersubstrate in grossen Mengen und konstanter Qualität.

Nachfolgend werden Ausführungsbeispiele für die Herstellung von erfindungsgemässen Trägersubstraten beschrieben. Alle Angaben in Teilen oder Prozenten beziehen sich auf das Gewicht, sofern nichts anderes angegeben ist.

### Erstes Ausführungsbeispiel

Als Substratkörper dient ein Aluminiumblech aus 99.9 Gew.-% Al mit glänzender Oberfläche. Das Aluminiumblech wird in einer milden alkalischen Entfettungslösung gereinigt, in Wasser gespült, in Salpetersäure dekapiert, in Wasser gespült, kurz in Ethanol getaucht und getrocknet.

Anschliessend wird auf der Rückseite des Bleches ein geeigneter Abdecklack aufgebracht und der derart vorbehandelte Substratkörper in einem Phosphorsäure-Elektrolyten mit einer Konzentration von 155 g/l H₃PO₄ bei einer Elektrolyttemperatur von 68 °C mit Gleichstrom einer Stromdichte von 12 A/dm² während 10 Sekunden mit einer Anodisierspannung von 20 V anodisiert. Die resultierende Schichtdicke der Aluminiumoxidschicht beträgt typischerweise 100 nm.

Die Formschicht, d.h. die Aluminiumoxidschicht, weist nun Poren auf, die einen gegen die freie Oberfläche der Aluminiumoxidschicht ragenden, nach oben offenen Stammbereich aufweisen.

Der Formkörper, d.h. insbesondere die freie Oberfläche der Formschicht, wird nun mit Wasser gespült und in einem goldsalzhaltigen Aktivierungsbad (1 g/l H(AuCl₄) * 3 H₂O, 7 g/l H₂SO₄) mit einer angelegten Wechselspannung von 16 V während 5 bis 10 Sekunden behandelt und danach erneut mit Wasser gespült.

Die Poren der derart vorbereiteten Formschicht weisen am Porengrund eingelagerte Goldpartikel auf, welche bevorzugt als Keime für eine weitere selektive Goldabscheidung dienen. Die selektive Goldabscheidung, d.h. die weitere Ablagerung von Gold an die bereits in den Poren befindlichen Goldpartikel, geschieht vorerst auf chemischem Weg in einem Goldbad (Goldbad: Auruna® 516 der Firma Degussa enthaltend 4 g/l Au, pH 7.5) bei einer Temperatur von 70 °C. Die selektive Goldabscheidung dauert ca. 2 Stunden, wobei eine Goldschicht mit einer Schichtdicke von ca. 2 µm erzeugt wird. Die mit Gold beaufschlagte Formschicht wird nun wieder mit Wasser gespült und anschliessend wird die Goldschicht in einem handelsüblichen, galvanischen Goldbad (Goldbad: Auruna® 552 der Firma Degussa enthaltend 8 g/l Au, pH 6) mit einer Stromdichte von 0.4 A/dm² auf ca. 10 µm Au verstärkt.

Nach erneutem Spülen des mit Gold beschichteten Formkörpers mit Wasser wird der Abdecklack, beispielsweise chemisch oder durch Plasmaätzen, entfernt. Der Formkörper wird nun chemisch in Natronlauge (50 g/l NaOH) aufgelöst. Bei einer NaOH-Badtemperatur von 40 °C dauert dieser Vorgang mehrere Stunden, typischerweise ca. 12 Stunden.

Nach dem Entfernen des Formkörpers verbleibt das gewünschte Trägersubstrat mit den Nanokörpern, wobei die Nanokörper im wesentlichen dieselben Abmessungen wie die zuvor in der Form schicht vorhandenen Porenkavitäten aufweisen.

Das Trägersubstrat wird erneut mit Wasser gespült, in 5 %-ige Citronensäure bei 20 "C während 10 Minuten dekapiert, wieder mit Wasser gespült, in Ethanol gegeben und dann getrocknet.

Wird ein derart hergestelltes Trägersubstrat für die Oberflächen-verstärkte, Raman-spektrometrische Analyse von Anilin verwendet, wobei als Erregerstrahlung die 632.8 nm Linie eines Helium-Ion-Lasers verwendet wird und die Laserleistung 8 mW beträgt, wird ein Raman-Spektrum erhalten, welches die typischen Raman-Linien für Anilin auf Gold zeigt.

### Zweites Ausführungsbeispiel

Ein als Substratkörper dienendes Aluminiumblech, wie im ersten Ausführungsbeispiel beschrieben, wird entsprechend dem im ersten Ausführungsbeispiel beschriebenen Verfahren gereinigt.

Anschliessend wird auf der Rückseite des Bleches ein geeigneter Abdecklack aufgebracht und der derart vorbehandelte Substratkörper in einem Phosphorsäureelektrolyten mit einer Konzentration von 150 g/l H₃PO₄ bei einer Elektrolyttemperatur von 35 °C mit Gleichstrom und einer Stromdichte von 120 A/m² während 6 Minuten anodisiert, wobei die Anodisierspannung kontinuierlich von 0 auf 50 V erhöht wird. Direkt anschliessend wird die Anodisierspannung in 5 bis 6 Stufen auf ca. 15 V abgesenkt, wobei die Spannungsabsenkungsstufen anfänglich klein sind und allmählich vergrössert werden. Nach Erreichen der Anodisierspannung von ca. 15 V wird diese während ca. 30 Sekunden aufrechterhalten. Die resultierende Schichtdicke der Aluminiumoxidschicht beträgt typischerweise 600 nm.

Der Formkörper, d.h. der anodisierte Substratkörper, weist nun Poren auf, die einen gegen die freie Formkörperoberfläche ragenden, nach oben offenen Stammbereich und einen gegen den Substratkörper gerichteten Verzweigungsbereich aufweisen.

Der Formkörper, d.h. insbesondere die freie Oberfläche der Formschicht, wird nun mit Wasser gespült und in einem goldsalzhaltigen Aktivierungsbad (1 g/l H(AuCl₄) * 3 H₂O, 7 g/l H₂SO₄) mit einer angelegten Wechselspannung von 16 V während 5 bis 10 Sekunden behandelt und danach erneut mit Wasser gespült.

Die selektive Goldabscheidung erfolgt chemisch und anschliessend galvanisch, wie im ersten Ausführungsbeispiel beschrieben. Nach einem Spülvorgang mit Wasser wird entsprechend dem ersten Ausführungsbeispiel der Abdecklack entfernt, der Formkörper chemisch aufgelöst und somit das gewünschte Trägersubstrat aus Gold freigelegt.

Wie im ersten Anwendungsbeispiel beschrieben, wird das derart hergestellte Trägersubstrat mit den metallischen Nanokörpern für die Oberflächen-verstärkte, Raman-spektrometrische Analyse von Anilin verwendet, wobei die Raman-Spektren dieses ausgewählten Systems mit der 632.8 nm Linie eines Helium-Ion-Lasers aufgenommen werden. Die Laserleistung beträgt 8 mW. Die erhaltenen Spektren zeigen die typischen Raman-Linien für Anilin auf Gold.

### Drittes Ausführungsbeispiel

Ein als Substratkörper dienendes Aluminiumblech, wie im ersten Ausführungsbeispiel beschrieben, wird entsprechend dem im ersten oder zweiten Ausführungsbeispiel beschriebenen Verfahren gereinigt und anodisiert. Der derart gebildete Formkörper wird gemäss dem ersten Ausführungsbeispiel aktiviert.

Die selektive Goldabscheidung erfolgt chemisch und anschliessend galvanisch, wie im ersten Ausführungsbeispiel beschrieben. Nach einem Spülvorgang mit Wasser wird entsprechend dem ersten Ausführungsbeispiel der Abdecklack entfernt, der Formkörper chemisch aufgelöst und somit das gewünschte Trägersubstrat freigelegt.

Die metallischen Nanokörper des Trägersubstrates werden nun einer elektrolytischen Nachbehandlung unterzogen, wobei der Durchmesser und die Länge bzw. Höhe der Nanokörper verkleinert wird. Für diese Nachbehandlung wird das Trägersubstrat in eine geeignete Halterung gegehen und in 1 M H₂SO₄ mit 300 µA/cm² während 10 Sekunden behandelt, danach mit Wasser gespült und während 1 Minute in 5 M HCI behandelt. Danach wird das nachbehandelte Trägersubstrat wieder mit Wasser gespült.

Wie im ersten und zweiten Anwendungsbeispiel beschrieben, wird das derart hergestellte Trägersubstrat mit den metallischen Nanokörpern für die Oberflächen-verstärkte, Raman-spektrometrische Analyse von Anilin getestet, wobei die Raman-Spektren dieses ausgewählten Systems mit der 632.8 nm Linie eines Helium-Ion-Lasers aufgenommen werden. Die Laserleistung beträgt 8 mW. Die erhaltenen Spektren zeigen wiederum die typischen Raman-Linien für Anilin auf Gold.

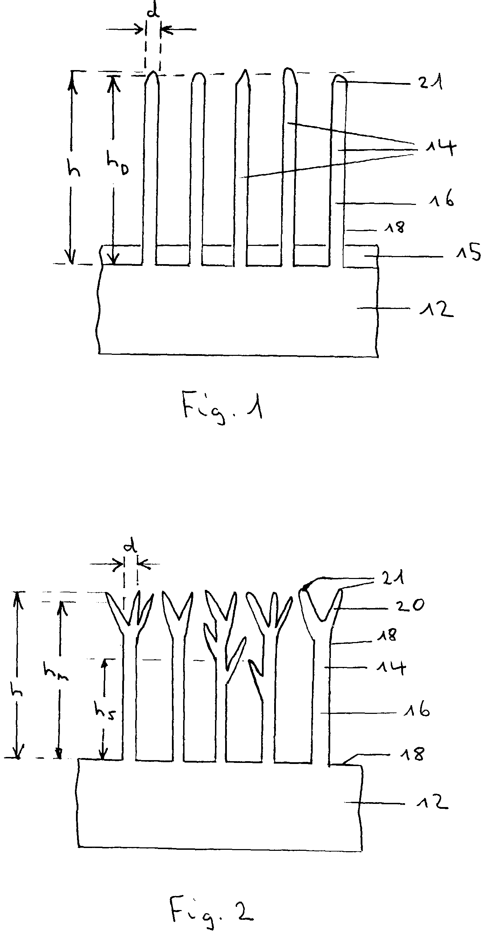

Vorliegende Erfindung wird beispielhaft anhand der Figuren 1 bis 6 weiter erläutert.

Figur 1 zeigt schematisch einen Querschnitt eines nach dem erfindungsgemässen Verfahren hergestellten Trägersubstrates für die Oberflächen-verstärkte, Raman-spektrometrische Analyse von Substanzen. Das Trägersubstrat enthält eine Trägerschicht 12, an welche auf einer Seite eine Vielzahl von Nanokörpern 14 angeformt sind. Die in Figur 1 dargestellten Nanokörper zeigen einen orthogonal von der Trägerschicht wegführenden Stammbereich 16, welcher jeweils an seinem freiliegenden Ende in eine einzige endständige Spitze 21 ausläuft. Die individuellen Nanokörper 14 weisen eine Höhe h und einen maximalen Querschnittsdurchmesser d auf, wobei der Querschnittsdurchmesser d der Nanokörper-Stammbereiche 16 in Abhängigkeit von der Höhe im wesentlichen konstant bleibt, d.h. die Nanokörper-Stammbereiche 16 sind im wesentlichen stabförmig ausgebildet. Zudem weisen alle Nanokörper 14 eine im wesentlichen gleiche Höhe h auf. Dabei bezeichnet h_{D} die über alle Nanokörper 14 gemittelte Höhe der Nanokörper. In der in Figur 1 dargestellten Ausführungsform befindet sich zwischen den Nanokörpern 14 noch eine auf die Trägerschicht 12 deponierte, mechanische Stützschicht 15, welche die mechanisch wenig stabilen, langen und dünn ausgebildeten Nanokörper 14 stützt. Die Trägersubstratoberfläche 18 betrifft einerseits die Oberfläche der Nanokörper 14, sowie die zwischen den Nanokörpern 14 liegende Oberfläche der Trägerschicht 12, welche in Figur 1 jedoch von der mechanischen Stützschicht 15 bedeckt ist.

Figur 2 zeigt schematisch einen Querschnitt eines erfindungsgemässen Trägersubstrates für die Oberflächen-verstärkte, Raman-spektrometrische Analyse von Substanzen. Das Trägersubstrat enthält eine Trägerschicht 12. Auf der einen Seite der Trägerschicht 12 ist eine Vielzahl von Nanokörpern 14 angeformt. Die Nanokörper 14 weisen jeweils einen stabförmigen Stammbereich 16 und wenigstens zwei an den Stammbereich 16 angeformte Verzweigungselemente 20 auf. Die beiden in Figur 2 links aussen dargestellten Nanokörper 14, sowie der äusserste Nanokörper 14 auf der rechten Seite in Figur 2 zeigen beispielhaft jeweils endständig am Stamm bereich 16 angeformte Verzweigungselemente 20. Die restlichen in Figur 2 dargestellten Nanokörper weisen neben den endständig am Stammbereich 16 angeformten Verzweigungselementen 20 noch weitere, nicht endständig an den Stammbereich angeformte Verzweigungselemente 20 auf. Jedes Verzweigungselement 20 weist an seinem frei liegenden Ende eine endständige Spitze 21 auf.

Die Höhe der einzelnen Nanokörper 14 ist in Figur 2 wiederum mit h und der maximale Querschnittsdurchmesser jedes Nanokörpers 14 mit d gekennzeichnet. Der maximale Querschnittsdurchmesser jedes Nanokörpers 14 liegt jeweils im Stammbereich 16, wobei der Stammbereich 16 stabförmig bis leicht kegelstumpfförmig ausgebildet ist, so dass der grösste maximale Querschnittsdurchmesser d üblicherweise im Trägerschicht-nahen Bereich des Nanokörpers 14 gemessen wird. Die Trägersubstratoberfläche 18 bezeichnet wiederum die gesamte Oberfläche des Trägersubstrates auf der Trägerschichtseite, welche die Nanokörper 14 enthält. Demnach umfasst die Trägersubstratoberfläche 18 einerseits die zwischen den Nanokörpern 14 liegende Trägerschichtoberfläche, sowie andererseits die gesamte Oberfläche der Nanokörper 14, d.h. deren Oberfläche bezüglich deren Stammbereiche 14 und der Verzweigungselemente 20.

Die maximale Höhe der einzelnen Verzweigungselemente 20, d.h. der maximale Abstand der endständigen Spitze 21 eines Verzweigungselementes 20 von der zwischen den Nanokörpern 14 liegenden Trägersubstratoberfläche 18, ist mit hₛ bezeichnet. Die über alle auf der Trägerschicht 12 vorhandenen Nanokörper 14 gemittelte Höhe hₛ aller Verzweigungselemente 20 ist mit hₘ bezeichnet.

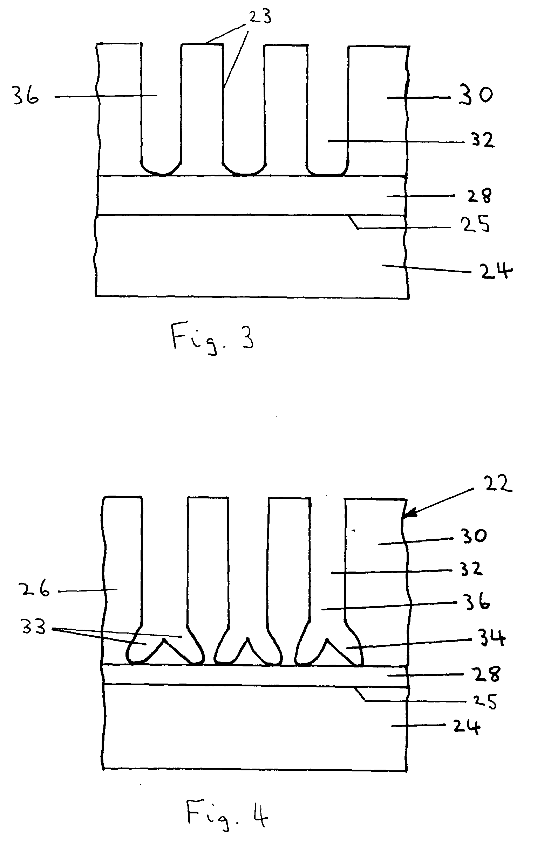

Figur 3 zeigt schematisch einen Querschnitt durch einen während dem erfindungsgemässen Verfahren bereitgestellten Formkörper 22. Der Formkörper 22 besteht aus dem Substratkörper 24 und einer Formschicht 26, wobei sich die Formschicht 26 aus einer porösen Schicht 30 und einer Sperrschicht 28 zusammensetzt. Die Sperrschicht 28 liegt einer Seite des Substratkörpers 24, der sogenannten Substratkörperoberfläche 25, an. Die poröse Schicht 30 enthält die Porenkavitäten 36, wobei die in Figur 3 dargestellten Porenkavitäten 36 eine zylinderförmige Gestalt aufweisen. Die frei liegende Oberfläche der Formschicht 26 beschreibt die Formkörperoberfläche 23, welche einerseits durch die Oberfläche der Poren-kavitäten 36 und andererseits durch die zwischen den Porenkavitäten 36 frei liegende Oberfläche der porösen Schicht 30 definiert ist.

Ein gemäss Figur 3 gebildeter Formkörper 22 entsteht beispielsweise nach einer anodischen Oxidation einer metallenen Substratkörperoberfläche 25 mit einer konstanten oder kontinuierlich oder stufenweise steigenden Anodisierspannung in einem das Metalloxid rücklösenden Elektrolyten.

Figur 4 zeigt schematisch einen Querschnitt durch einen während dem erfindungsgemässen Verfahren bereitgestellten Formkörper 22, nachdem - ausgehend von einem Formkörper 22 gemäss Figur 3 - die anodische Oxidation der Substratkörperoberfläche 25 mit einer gegenüber der zuvor, d.h. für die Herstellung von Portenkavitäten gemäss Figur 3, angelegten Anodisierspannung tieferen Spannung weitergeführt wird.

Die in Figur 4 gezeigten, in der porösen Schicht 30 vorhandenen Porenkavitäten 36 weisen einen vertikal zur Substratkörperoberfläche 25 liegenden, nach oben offenen Poren-Stammbereich 32 und einen der Sperrschicht 28 anliegenden Poren-Verzweigungsbereich 33 auf. Die gezeigten Poren weisen im Verzweigungsbereich 33 jeweils zwei Porenverzweigungen 34 auf.

Ein gemäss Fig. 4 ausgebildeter Formkörper 22 entsteht beispielsweise, wenn - ausgehend von einem Formkörper 22 gemäss Figur 3 - die anodische Oxidation mit einer tieferen Anodisierspannung weitergeführt wird. Dazu kann die Anodisierspannung - ausgehend von der für die Herstellung der zylinderförmigen Porenkavitäten 32, 36 angelegten Anodisierspannung - stufenweise oder kontinuierlich abgesenkt werden. Da der sich während der anodischen ()xidation bildende Porendurchmesser, sowie die sich ausbildende Schichtdicke der Sperrschicht 28 von der Grösse der Anodisierspannung abhängen, verringert sich während einer solchen zweiten Verfahrensstufe die Dicke der Sperrschicht 28, wobei die Schichtdicke der porösen Oxidschicht 30 weiter wächst. Da die Bildung der Oxidschicht 28, 30 an der Grenzschicht zwischen Aluminium-Substratkörper 24 und Sperrschicht 28 stattfindet, und der Porendurchmesser Anodisierspannungs-abhängig ist, bilden sich anschliessend an den Poren-Stammbereich 32 mehrere Porenverzweigungen 34 mit einem gegenüber dem Stammbereich 32 kleineren Durchmesser.

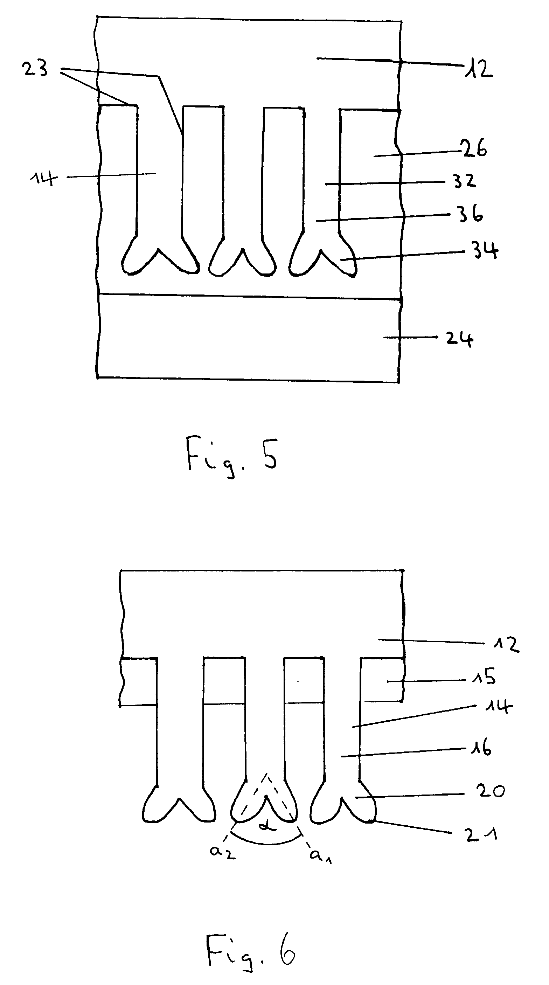

Figur 5 zeigt schematisch den Querschnitt durch einen während dem erfindungsgemässen Verfahren bereitgestellten, mit Beschichtungsmaterial versehenen Formkörper 22. Der Formkörper 22 besteht aus einem Substratkörper 24 und einer Formschicht 26. Die poröse Schicht 30 der Formschicht 26 enthält Poren, deren Porenkavitäten 36 einen Stammbereich 32 und einen Verzweigungsbereich 33 mit wenigstens zwei Porenverzweigungen 34 aufweisen. Die Porenkavitäten 36 sind vollständig mit Beschichtungsmaterial ausgefüllt. Das in den Poren-kavitäten 36 befindliche Beschichtungsmaterial bildet nach dem Entfernen der Formschicht 26 die Nanokörper 14 des Trägersubstrates. Zudem befindet sich auf der Formschicht 26 eine durchgehende, das in den Porenkavitäten 36 befindliche Beschichtungsmaterial verbindende Schicht aus Beschichtungsmaterial, welche nach dem Freilegen des Trägersubstrates die Trägerschicht 12 bildet.

Ein gemäss Figur 5 ausgebildeter, mit Beschichtungsmaterial versehender Formkörper 22 entsteht beispielsweise, wenn -- ausgehend von einem Formkörper 22 gemäss Fig. 4 - die Formkörperoberfläche 23 chemisch und/oder eletrolytisch aktiviert und nachfolgend durch chemische und/oder elektrolytische Verfahren mit Beschichtungsmaterial beaufschlagt wird.

Figur 6 zeigt schematisch den Querschnitt durch ein mittels dem erfindungsgemässen Verfahren hergestellten Trägersubstrat für die Oberflächen-verstärkte, Raman-spektrometrische Analyse von Substanzen. Das Trägersubstrat weist eine Trägerschicht 12 und auf einer Seite der Trägerschicht 12 eine Vielzahl von Nanokörpern 14 auf. Die in Figur 6 dargestellten Nanokörper 14 weisen einen Stammbereich 16 und jeweils zwei Verzweigungselemente 20 auf, deren Längsachsen a₁, a₂ einen spitzen Winkel α einschliessen. Zudem weist jedes Verzweigungselement 20 an den freiliegenden Enden eine endständige Spitze 21 auf. Die Stammbereiche 16 der Nanokörper 14 werden von einer zwischen diesen liegenden Stützschicht 15 mechanisch gestützt, wobei ein Teil der Stammbereiche 16 und die Verzweigungselemente 20 freiliegen.

Ein gemäss Figur 6 ausgebildetes Trägersubstrat entsteht beispielsweise, wenn - ausgehend von einem mit Beschichtungsmaterial versehenen Formkörper 22 gemäss Figur 5 -- der Substratkörper 24 und ein Teil der Form schicht 26 chemisch weggeätzt wird.

## Patentansprüche

1. Trägersubstrat für die Oberflächen-verstärkte, Raman-spektrometrische Analyse von Substanzen, enthaltend eine Trägerschicht (12) und eine Vielzahl von Nanokörpern (14), welche wenigstens an eine Seite der Trägerschicht (12) angeformt sind,
dadurch gekennzeichnet, dass
jeder Nanokörper (14) einen an die Trägerschicht (12) anliegenden, stabförmigen Stammbereich (16) und wenigstens zwei, vorzugsweise 2 bis 4, an den Stammbereich (16) angeformte Verzweigungselemente (20) aufweist, und die Dichte der Verzweigungselemente (20) mindestens 10⁸/cm² beträgt.

2. Trägersubstrat nach Anspruch 1, dadurch gekennzeichnet, dass jeder Nanokörper (14) einen maximalen Querschnittsdurchmesser (d) zwischen 10 und 250 nm, insbesondere zwischen 10 und 150 nm, und eine Höhe (h) von 30 nm bis 5 µm, insbesondere von 30 nm bis 2 µm, aufweist.

3. Trägersubstrat nach Anspruch 1 oder 2, dadurch gekennzeichnet, dass die Höhe (h) der einzelnen stabförmigen Nanokörper (14) um nicht mehr als ± 3 % von der über alle stabförmigen Nanokörper (14) gemittelten Höhe (h_{D}) variiert .

4. Trägersubstrat nach einem der Ansprüche 1 bis 3, dadurch gekennzeichnet, dass die Dichte der Verzweigungselemente (20) 10⁸ bis 10¹²/cm² beträgt.

5. Trägersubstrat nach einem der Ansprüche 1 bis 4, dadurch gekennzeichnet, dass 95 % aller Verzweigungselemente (20) die gleiche Höhe (hₛ) aufweisen, wobei gleiche Höhe (hₛ) bedeuted, dass die Höhe (hₛ) um nicht mehr als ± 5 % der über das gesamte Substrat gemittelten Höhe (hₘ) der Verzweigungselemente (20) variiert.

6. Trägersubstrat nach einem der Ansprüche 1 bis 5, dadurch gekennzeichnet, dass die Nanokörper (14) und die Trägerschicht (12) aus demselben Werkstoff bestehen, bevorzugt aus Metall, insbesondere aus Gold oder Silber.

7. Verfahren zur Herstellung eines Trägersubstrates für die Oberflächen-verstärkte, Raman-spektrometrische Analyse von Substanzen, enthaltend eine Trägerschicht (12) und eine Vielzahl von an die Trägerschicht (12) angeformten Nanokörpern (14) mit jeweils wenigstens einer endständigen Spitze (21), wobei jeder Nanokörper (14) einen maximalen Querschnittsdurchmesser (d) zwischen 10 und 250 nm und eine Höhe (h) von 30 nm bis 5 µm aufweist und die Dichte der endständigen Spitzen (21) mindestens 10⁸/cm² beträgt,
dadurch gekennzeichnet, dass
a) in einem ersten Schritt ein Formkörper (22) mit einer zur gewünschten Trägersubstratoberfläche (18) spiegelbildlichen Formkörperoberfläche (23) dadurch geschaffen wird, dass ein Substratkörper (24) aus einem anodisierbaren Metall anodisch in einem das betreffende Metalloxid rücklösenden Elektrolyten oxidiert wird, wodurch wenigstens auf einer Substratkörperoberfläche (25) eine Formschicht (26) aus Metalloxid, enthaltend eine an die Substratkörperoberfläche (25) anliegende Sperrschicht (28) und eine dieser anliegenden, porösen Schicht (30), gebildet wird, und die poröse Schicht (30) die zu den gewünschen Nanokörpern (14) spiegelbildlich ausgebildeten Poren-Kavitäten (36) enthält;
b) in einem zweiten Schritt die Formkörperoberfläche (23) durch chemische und/oder elektrolytische Methoden ganzflächig derart beschichtet wird, dass die Poren-Kavitäten (36) vollständig mit einem Beschichtungsmaterial ausgefüllt werden und zudem eine die Poren-Kavitäten (36) verbindende Trägerschicht (12) aus einem Beschichtungsmaterial gebildet wird, und die Trägerschicht (12) eine zusammenhängende, mechanisch tragende Schicht darstellt;
c) und in einem dritten Schritt der Formkörper (22) derart entfernt wird, dass zumindest die endständigen Spitzen (21) frei liegen.

8. Verfahren nach Anspruch 7, dadurch gekennzeichnet, dass der Substratkörper (24) aus Aluminium oder einer Aluminiumlegierung besteht.

9. Verfahren nach Anspruch 7 oder 8, dadurch gekennzeichnet, dass die im ersten Verfahrensschritt durchzuführende Oxidation des Substrates (24) in mehreren Anodisierschritten erfolgt, wobei in einem ersten Anodisierschritt die Anodisierspannung kontinuierlich oder schrittweise von 0 auf einen ersten Wert U₁ erhöht wird, und in einem weiteren Anodisierschritt die Anodisierspannung kontinuierlich oder schrittweise auf einen zweiten, gegenüber U₁ kleineren Wert U₂ reduziert wird.

10. Verfahren nach Anspruch 9, dadurch gekennzeichnet, dass der erste Wert U₁ der Anodisierspannung zur Bildung von zylinder- oder kegelstumpfförmigen, langen Poren-Stammbereichen (32) zwischen 12 und 80 V liegt, und der zweite Wert U₂ der Anodisierspannung zur Bildung wenigstens zweier Porenverzweigungen (34) pro Poren-Stammbereich (32) am gegen die Substratkörperoberfläche (25) gerichteten Ende jeder Pore (36) zwischen 10 und 20 V beträgt.

11. Verfahren nach einem der Ansprüche 7 bis 10, dadurch gekennzeichnet, dass die im zweiten Verfahrensschritt durchzuführende Beschichtung der Formkörperoberfläche (23) durch chemische und/oder elektrolytische Methoden geschieht.

12. Verfahren nach Anspruch 11, dadurch gekennzeichnet, dass die im zweiten Verfahrensschritt durchzuführende Beschichtung der Formkörperoberfläche (23) in drei Stufen erfolgt, wobei in einer ersten Stufe die Formkörperoberfläche (23) und insbesondere die Poren-Kavitäten (36) elektrolytisch mit Beschichtungsmaterial bekeimt werden, in einer zweiten Stufe durch eine stromlose, chemische Abscheidung die Poren-Kavitäten (36) vollständig mit Beschichtungsmaterial gefüllt werden und die chemische Abscheidung von Beschichtungsmaterial solange weitergeführt wird, bis auf der zwischen den Poren-Kavitäten (36) liegenden Formkörperoberfläche (23) eine Schicht von 100 nm bis 2 µm aus Beschichtungsmaterial gebildet ist, und in einer dritten Stufe die Beschichtung galvanisch solange verstärkt wird, bis eine Beschichtungs-Schichtdicke von 10 bis 20 µm gebildet ist.

13. Verfahren nach einem der Ansprüche 7 bis 12, dadurch gekennzeichnet, dass als Beschichtungsmaterial Gold oder Silber gewählt wird.

14. Verfahren nach einem der Ansprüche 7 bis 13, dadurch gekennzeichnet, dass das im dritten Verfahrensschritt durchzuführende Enfernen des Formkörpers (22) durch chemisches Wegätzen der Formschicht (26) geschieht.

15. Verfahren nach einem der Ansprüche 7 bis 13, dadurch gekennzeichnet, dass das im dritten Verfahrensschritt durchzuführende Enfernen des Formkörpers (22) in zwei Stufen geschieht, wobei zuerst der gesamte Substratkörpers (24) chemisch weggeätzt wird, und in einer zweiten Stufe zumindest ein Teil der Formschicht (26) durch chemisches Ätzen oder durch Plamaätzen entfernt wird.

16. Verfahren nach einem der Ansprüche 7 bis 15, dadurch gekennzeichnet, dass die Nanokörper (14) durch eine Nachbehandlung mittels chemischer oder elektrolytischer Ätzung oder durch Plasmaätzen, oder mittels Deposition einer zusätzlichen, dünnen Schicht, insbesondere aus Gold oder Silber, hinsichtlich ihrer Oberflächen-verstärkenden Eigenschaften für die Raman-Spektrometrie optimiert werden.
